# EUROPÄISCHE PATENTSCHRIFT

(11) **EP 3 412 944 B1**
(45) Veröffentlichungstag und Bekanntmachung des Hinweises auf die Patenterteilung: **03.06.2020**
(21) Anmeldenummer: 18176882.1
(22) Anmeldetag: 08.06.2018
(51) Int. Cl.: F16K 11/07

(54) **STEUERVENTIL**
CONTROL VALVE
SOUPAPE DE COMMANDE

(30) Priorität: 08.06.2017 DE 102017112700
(43) Veröffentlichungstag der Anmeldung: 12.12.2018
(73) Patentinhaber: Schwäbische Hüttenwerke Automotive GmbH, 73433 Aalen-Wasseralfingen (DE)
(72) Erfinder: Peters, Sven, 88427 Bad Schussenried (DE); Scheidemann, Andreas, 89073 Ulm (DE); Preisler, Lothar, 88427 Bad Schussenried (DE)
(74) Vertreter: SSM Sandmair

(56) Entgegenhaltungen:
- US-A1- 2006 043 787
- US-A1- 2009 139 395
- US-A1- 2014 103 233

## Beschreibung

Die Erfindung betrifft ein Steuerventil, beispielsweise ein Steuerventil, das in eine Pumpeneinheit mit verstellbarer Förderleistung eingebaut ist, mit einem Ventilgehäuse mit einem Kolbenraum und einem Steuerkolben, der in dem Kolbenraum angeordnet ist und den Kolbenraum in wenigstens einen ersten Ventilraum und einen zweiten Ventilraum unterteilt. Im Kolbenraum ist wenigstens ein Leckagepfad vorhanden, der eine gewollte Leckage zwischen dem ersten Ventilraum und dem zweiten Ventilraum einstellt. Die Erfindung betrifft weiterhin eine Kraftfahrzeugvorrichtung, die eine verstellbare Rotationspumpe und das Steuerventil umfasst, und den Steuerkolben als solchen.

Aufgabe der Erfindung ist es insbesondere, ein Steuerventil zur Verfügung zu stellen, mit dem eine bessere Regelung eines Aggregats, insbesondere einer Rotationspumpe, bezüglich zum Beispiel einer Durchflussmenge und/oder einer Schwingungsneigung eines von dem Aggregat geförderten Mediums erreicht wird.

Aus der US 2006/0043787 A1 ist ein Steuerventil bekannt, mit einem Ventilgehäuse und einem Steuerkolben, wobei der Steuerkolben den Kolbenraum in wenigstens drei Ventilräume unterteilt. Zwischen zwei benachbarten Ventilräumen ist ein gewollter Leckagepfad gebildet, durch den ein Fluid fließen kann. Der Leckagepfad erlaubt in jeder Stellung der Kolbens einen geringen Leckagefluss, um Schmutzpartikel von einer Wirkfläche wegzuspülen und dem Reservoir zuzuführen. Die US 2009/0139395 A1 betrifft ein Steuerventil benannt, mit einem Steuergehäuse und einem Steuerkolben, der den Kolbenraum in mehrere Ventilräume unterteilt. Das Steuerventil umfasst zwei Leckagepfade, die jeweils eine Ventilkammer mit einem Sumpf verbinden. Der Leckagepfad ist zwischen dem Innenumfang des Kolbenraums und Dichtflächen des Kolbens gebildet. Die US 2014/0103233 A1 betrifft eine Ventilanordnung für eine hydraulische Vorrichtung

Diese Aufgabe wird durch das Steuerventil mit den Merkmalen des Anspruchs 1 und die Kraftfahrzeugvorrichtung des Anspruchs 12 gelöst. Vorteilhafte Weiterbildungen des Steuerventils und der Kraftfahrzeugvorrichtung sind in den abhängigen Ansprüchen behandelt.

Ein erster Aspekt der Erfindung betrifft ein Steuerventil mit einem Ventilgehäuse, das einen Kolbenraum aufweist. Das Ventilgehäuse ist bevorzugt einteilig, kann aber auch aus zwei oder mehr Teilen, die miteinander verbunden sind oder werden, gebildet sein. Das Ventilgehäuse kann in einem Gussverfahren hergestellt sein, alternativ kann das Ventilgehäuse generativ erzeugt sein, das heißt im weitesten Sinne mittels eines Sinterprozesses und/oder eines 3D-Druckverfahrens. Als Material für das Ventilgehäuse kann ein Metall oder Metallpulver, wie zum Beispiel Stahl, und/oder ein Leichtmetall, wie beispielsweise Aluminium, und/oder ein Kunststoff verwendet werden, abhängig vom Einsatzort des Steuerventils und den dort vorherrschenden Bedingungen, wie Temperatur, aggressive Stoffe, mechanische Belastung, etc.

Zumindest bei einem Ventilgehäuse aus einem Gussmaterial kann es notwendig sein, den Kolbenraum und/oder eventuelle Ein- oder Auslässe in den oder aus dem Kolbenraum mechanisch nachzuarbeiten.

Das Steuerventil umfasst weiterhin einen Steuerkolben, der beweglich in dem Kolbenraum angeordnet ist und den Kolbenraum in wenigstens einen ersten Ventilraum und einen zweiten Ventilraum unterteilt. Der erste und der zweite Ventilraum sind über einen ersten Leckagepfad miteinander verbunden, wobei es sich bei dem ersten Leckagepfad um einen beabsichtigten oder konstruktiv vorgegebenen ersten Leckagepfad handelt, nicht um den durch die Toleranzen der Bauteile sich einstellenden Leckagepfad. Der erste Leckagepfad stellt eine gewollte, das heißt bevorzugt vorgegebene oder konstruktiv vorgegebene, erste Leckage zwischen dem ersten und dem zweiten Ventilraum ein. Unter gewollter Leckage wird hier insbesondere die Menge eines Fluids pro Zeiteinheit verstanden, die in Abhängigkeit von Parametern, wie Druck des Fluids, Temperatur des Fluids und/oder der Umgebung, Zähigkeit des Fluids, Bewegungsgeschwindigkeit des Kolbens, etc. zwischen dem ersten Ventilraum und dem zweiten Ventilraum ausgetauscht wird.

Erfindungsgemäß unterteilt der Steuerkolben den Kolbenraum in wenigstens drei Ventilräume, wobei der erste Ventilraum und der dritte Ventilraum an gegenüberliegenden Seiten unmittelbar auf den zweiten Ventilraum folgen, oder der zweite Ventilraum und der dritte Ventilraum an gegenüberliegenden Seiten unmittelbar auf den ersten Ventilraum folgen. Mit anderen Worten: Der zweite Ventilraum ist im Kolbenraum zwischen dem ersten Ventilraum und dem dritten Ventilraum angeordnet, oder der erste Ventilraum ist im Kolbenraum zwischen dem zweiten Ventilraum und dem dritten Ventilraum angeordnet. Der dritte Ventilraum ist mit dem zweiten Ventilraum oder mit dem ersten Ventilraum über einen weiteren Leckagepfad verbunden, wobei eine zweite Leckage über den weiteren oder zweiten Leckagepfad kleiner ist als die erste Leckage über den ersten Leckagepfad. Bei der zweiten Leckage kann es sich um die durch die Fertigungstoleranzen unvermeidbare Leckage handeln. Die erste Leckage ist größer als die zweite Leckage.

Das Steuerventil kann wenigstens einen ersten Einlass umfassen, der in zumindest einer Kolbenstellung innerhalb des Kolbenraums in den ersten Ventilraum mündet. Es kann ferner einen weiteren oder zweiten Einlass umfassen, der zumindest in einer Kolbenstellung in den dritten Ventilraum mündet. Bevorzugt umfasst das Steuerventil wenigstens den ersten und zweiten Einlass. Der Einlass oder die Einlässe können in einer, respektive jeweils einer, Stirnseite in den Kolbenraum münden oder zwischen den beiden Stirnseiten des Ventilgehäuses, gewissermaßen von der Seite, durch jeweils eine seitliche Gehäuseöffnung, wie beispielsweise eine Bohrung, mit dem Kolbenraum verbunden sein.

Zur Unterteilung des Kolbenraums in die wenigstens zwei oder wenigstens drei Ventilräume oder Ventilkammern bilden eine Innenwandung des Kolbenraums oder des Ventilgehäuses und eine Außenwandung des Steuerkolbens, bevorzugt zumindest in vorgegebenen Bereichen, jeweils einen Dichtspalt, der benachbarte Ventilräume voneinander trennt. Das heißt beispielweise bei drei Ventilräumen, dass ein Dichtspalt den ersten Ventilraum vom zweiten Ventilraum trennt und ein weiterer Dichtspalt den zweiten Ventilraum vom dritten Ventilraum trennt. Dabei kann der erste Leckagepfad zum Beispiel durch den Dichtspalt zwischen dem ersten Ventilraum und dem zweiten Ventilraum verlaufen. Der zweite Leckagepfad kann durch den weiteren Dichtspalt zwischen dem zweiten Ventilraum und dem dritten Ventilraum verlaufen.

Das heißt, dass zur Einstellung der gewollten Leckage über den ersten Leckagepfad der Dichtspalt zwischen dem ersten Ventilraum und dem zweiten Ventilraum bevorzugt größer ausgeführt ist als der Dichtspalt zwischen dem zweiten Ventilraum und dem dritten Ventilraum und/oder als der Dichtspalt zwischen dem ersten Ventilraum und dem dritten Ventilraum. Ist der erste Ventilraum zwischen dem zweiten Ventilraum und einem weiteren Ventilraum angeordnet, gilt auch für den Dichtspalt zwischen dem ersten Ventilraum und dem zweiten Ventilraum und einen Dichtspalt zwischen dem ersten Ventilraum und dem weiteren Ventilraum, dass ersterer bevorzugt größer ausgeführt sein muss als letzterer. Die gewollte Leckage ist vorzugsweise durch eine Vergrößerung des entsprechenden Dichtspalts realisiert, beispielsweise durch eine Verkleinerung des Außendurchmessers im entsprechenden Bereich des Steuerkolbens und/oder durch Vergrößerung des Innendurchmessers im entsprechenden Bereich des Ventilgehäuses.

Das Steuerventil kann weiterhin einen Auslass umfassen, der, bevorzugt direkt, mit einem Reservoir oder der Umgebung oder einem Saugbereich des Aggregats verbunden ist. Der Auslass kann in den zweiten Ventilraum münden und ist, bevorzugt dauerhaft, das heißt, unabhängig von der Stellung des Steuerkolbens in dem Kolbenraum, mit dem Reservoir oder der Umgebung oder dem Saugbereich verbunden. Der in den ersten Ventilraum mündende Einlass ist vorzugsweise mit einer Einrichtung verbunden, die den ersten Ventilraum wahlweise mit der Hochdruckseite des Aggregats verbindet oder von der Hochdruckseite trennt. Der in den dritten Ventilraum mündende Einlass ist vorzugsweise permanent mit der Hochdruckseite des Aggregats verbunden.

Zumindest der erste Leckagepfad kann beispielsweise durch einen umlaufenden Spalt zwischen der Innenwandung des Kolbenraums oder des Ventilgehäuses und der Außenwandung des Steuerkolbens in Bereich des Dichtspalts, der den ersten Ventilraum von dem zweiten Ventilraum trennt, gebildet sein. Alternativ kann die Außenwandung des Steuerkolbens im besagten Bereich eine Struktur aufweisen, über die die Leckage vom ersten Ventilraum in den zweiten Ventilraum vorgegeben werden kann. Eine Struktur kann ebenso an der Innenwandung des Kolbenraums oder des Ventilgehäuses in dem Bereich eingebracht sein, der einem bevorzugt maximalen Verschiebeweg des genannten Dichtspalts zwischen dem ersten Ventilraum und dem zweiten Ventilraum innerhalb des Kolbenraums entspricht. Ferner kann der Steuerkolben im Bereich des vorgenannten Dichtspalts eine oder mehrere Durchgangsöffnungen aufweisen, die den ersten Ventilraum und den zweiten Ventilraum, bevorzugt direkt, miteinander verbinden. Des Weiteren kann das Ventilgehäuse eine oder mehrere Durchgangsöffnungen, die den ersten Ventilraum und/oder den in den ersten Ventilraum mündenden Einlass, bevorzugt direkt, mit dem zweiten Ventilraum und/oder dem in den zweiten Ventilraum mündenden Auslass fluidisch verbinden. Andere Wege des Verbindens der beiden Ventilräume sind ebenfalls umfasst, wenn sie das Herstellen einer gewollten Leckage von dem ersten Ventilraum in den zweiten Ventilraum ermöglichen.

Ein Verhältnis der ersten oder gewollten Leckage zu der zweiten Leckage soll vorteilhaft wenigstens 1,5:1 und besonders vorteilhaft wenigstens 2:1 sein, dass heißt, die erste Leckage soll wenigstens um das 1,5-fache oder vorteilhaft wenigstens um das 2-fache größer sein als die zweite Leckage. Auch bei der zweiten Leckage kann es sich um eine gewollte Leckage im Sinne der ersten Leckage handeln. Dabei gilt für den die zweite Leckage bildenden zweiten Leckagepfad das Gleiche wie für den ersten Leckagepfad, wenn die zweite Leckage eine gewollte Leckage im Sinne dieser Schrift ist. Das Steuerventil weist vorteilhaft zumindest zwei unterschiedliche Leckagen zwischen den Ventilräumen auf. Durch die Ausführung des Steuerkolbens mit der gewollten Leckage lässt sich eine gezielte Leckage des Volumenstroms über den ersten Leckagepfad am Steuerkolben vorbei in den entsprechenden Ventilraum, und weiter insbesondere in das Reservoir oder in die Umgebung oder in den Saugbereich, realisieren.

Der Steuerkolben kann drei Wirkflächen bevorzugt unterschiedlicher Größen aufweisen, wobei eine der Wirkflächen durch die Flächendifferenz zwischen der gewollten oder ersten Leckage und der zweiten Leckage, die optional ebenfalls eine gewollte Leckage sein kann, gebildet ist. Durch die Ausführung des Steuerkolbens mit den drei Wirkflächen lässt sich eine gezielte Leckage des Volumenstroms über den ersten Leckagepfad am Steuerkolben vorbei zu einer Wirkfläche realisieren. Die Wirkflächen sind bevorzugt als hydraulische Wirkflächen ausgeführt, wobei durch einen auf die jeweilige Wirkfläche wirkenden hydraulischen Fluiddruck jeweils eine daraus resultierende Verstellkraft auf den Steuerkolben wirken kann. Die drei Wirkflächen sind vorteilhaft in dieselbe Richtung orientiert, d.h. die auf die Wirkflächen wirkenden Verstellkräfte wirken vorzugsweise alle in die gleiche Richtung.

Durch das erfindungsgemäße Steuerventil kann eine vergrößerte Spreizung des Regeldrucks über dem Tastverhältnis erreicht werden. Das heißt zum Beispiel, dass statt 2% Tastverhältnisänderung pro bar 4% Tastverhältnisänderung pro bar erzielt werden können. Dadurch wird die Regelbarkeit zum Beispiel einer Pumpe verbessert und die Neigung eines gepumpten Fluids zum Schwingen reduziert.

Ein zweiter Aspekt der Erfindung betrifft eine Kraftfahrzeugvorrichtung mit einer verstellbaren Rotationspumpe, die eine Verstelleinrichtung zum Verstellen eines Fördervolumens der Rotationspumpe aufweist. Die Rotationspumpe umfasst ein Gehäuse, eine Saugseite mit einem Einlass, eine Druckseite oder Hochdruckseite mit einem Auslass, eine Förderkammer mit einem Boden und einem Deckel, und wenigstens einen Rotor, der in der Förderkammer beweglich gelagert ist und im Zusammenwirken mit einer Innenumfangswand der Förderkammer Förderzellen für das Fluid bildet. Die Rotationspumpe kann beispielsweise eine Außenzahnradpumpe, eine Innenzahnradpumpe, eine Flügelzellenpumpe oder eine andere bekannte verstellbare Rotationspumpe sein.

Die Rotationspumpe ist vorzugsweise als eine Verdrängerpumpe ausgebildet. Die Rotationspumpe ist vorteilhaft als eine Kraftfahrzeugpumpe ausgebildet. Die Rotationspumpe ist vorzugsweise als eine Schmier- und/oder Kühlmittelpumpe ausgebildet. Sie ist vorteilhaft dazu vorgesehen, eine Brennkraftmaschine und/oder ein Getriebe eines Kraftfahrzeugs, insbesondere eines Personenkraftwagens, mit Arbeitsmedium und/oder Schmier- und/oder Kühlmittel zu versorgen. Das Schmier- und/oder Kühlmittel ist vorzugsweise als ein Schmier- und/oder Kühlöl ausgebildet. Grundsätzlich kann die Rotationspumpe auch zur Förderung eines Betätigungsmittels für ein Getriebe vorgesehen sein. Die Pumpe kann insbesondere eine verstellbare Flügelzellenpumpe sein. Alternativ kann es sich aber auch um eine verstellbare Pendelschieberpumpe oder Zahnringpumpe oder Außenzahnradpumpe handeln.

Die Verstelleinrichtung umfasst bevorzugt einen Verstellring oder einen Verstellkolben, der über ein Druckfluid verstellt werden kann. Zum Regeln des Druck- oder Stellfluids umfasst die Kraftfahrzeugvorrichtung ein Steuerventil, wie es zum ersten Aspekt beschrieben wurde, wobei der wenigstens eine weitere Einlass des Steuerventils über den Fluid in den Kolbenraum respektive den dritten und optional vierten Ventilraum strömen kann, mit einer Hochdruckseite der verstellbaren Rotationspumpe verbunden oder verbindbar ist. Der erste Ventilraum kann mit einer Einrichtung zum Bereitstellen eines veränderbaren Regeldrucks verbunden sein, der Fluid unterschiedlichen Drucks liefert.

Der Steuerkolben kann durch eine Einrichtung, zum Beispiel ein Federelement oder einen Antrieb, in eine erste Position bewegt und dort gehalten werden. Bevorzugt ist die erste Position die, in der die verstellbare Rotationspumpe ein Maximum an Fluid fördern kann. Ein Abregeln der Rotationspumpe kann gegen die Kraft der Einrichtung über das Steuerventil erfolgen.

Ein dritter Aspekt der Erfindung betrifft den Stell- oder Steuerkolben als solchen. Das heißt, der dritte Aspekt betrifft auch einen Kolben für ein bereits bestehendes Steuerventil, der durch Nachbearbeitung oder Neuherstellung mit der gewollten Leckage versehen wird, so dass nach der Änderung oder nach einem Austausch des Steuerkolbens das bereits bestehende Steuerventil respektive dessen Spreizung des Regeldrucks über dem Tastverhältnis gemäß dem Vorschlag der Erfindung verändert wurde, um die Regelbarkeit zum Beispiel einer Pumpe zu verbessern und/oder die Neigung zur Erzeugung von Schwingungen im gepumpten Fluid zu reduzieren. Es soll hier ausdrücklich erwähnt werden, dass der Steuerkolben des dritten Aspekts an das jeweilige Steuerventil angepasst sein muss, was für den Fachmann eine Aufgabe darstellt, die ohne erfinderisches Zutun bewältigt werden kann.

Ein vierter Aspekt der Erfindung betrifft ein Nachrüstverfahren für ein Steuerventil, insbesondere für ein Steuerventil einer Kraftfahrzeugvorrichtung mit einer verstellbaren Rotationspumpe, das zur Verstellung der Rotationspumpe vorgesehen ist. Erfindungsgemäß wird der Steuerkolben im Nachrüstverfahren durch einen erfindungsgemäßen Steuerkolben ersetzt oder durch Nachbearbeitung als erfindungsgemäßer Steuerkolben ausgeführt. Vorzugsweise wird durch die Nachbearbeitung eine Leckage zwischen zwei Ventilräumen gewollt oder bewusst erhöht. Die Nachbearbeitung kann beispielsweise durch Schleifen, Bohren, Prägen, Fräsen, Lasern usw. erfolgen.

Vorteilhafte Ausgestaltungen werden auch in den Unteransprüchen und in den Kombinationen der Unteransprüche offenbart. Erfindungswesentliche Merkmale, die nur zu einem der Aspekte der Erfindung beschrieben sind, gelten in gleicher Weise auch für die anderen Aspekte, wenn dies sinnvoll ist.

Nachfolgend wird ein Ausführungsbeispiel der Erfindung anhand von Figuren erläutert. Am Ausführungsbeispiel offenbar werdende Merkmale bilden jeweils einzeln und in jeder Merkmalskombination die Gegenstände der Ansprüche und der vorstehenden Aspekte und auch die eingangs erläuterten Ausführungen vorteilhaft weiter. Es zeigen:
- Figur 1:: einen Steuerkolben eines Steuerventils;
- Figur 2:: teilweise einen Schnitt durch eine verstellbare Rotationspumpe mit einem Steuerventil, das einen Steuerkolben gemäß Fig. 1 aufweist, wobei sich die Rotationspumpe in Vollförderung befindet;
- Figur 3:: den Schnitt der Fig. 2, wobei die Rotationspumpe abgeregelt ist;
- Figur 4:: skizzenhaftes Schaltbild einer Kraftfahrzeugvorrichtung mit der verstellbaren Rotationspumpe, die das Steuerventil aufweist.

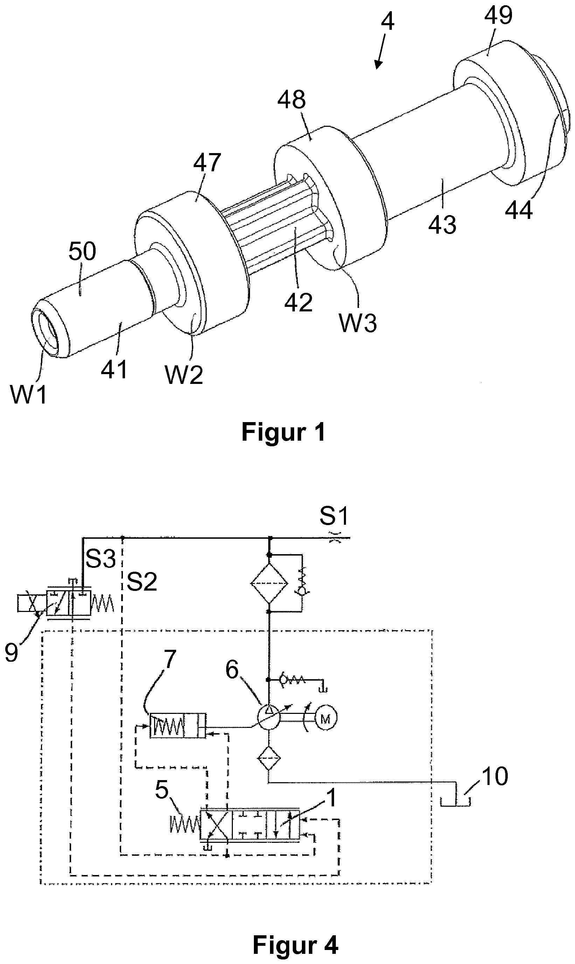

Die Figur 1 zeigt ein Ausführungsbeispiel eines isolierten Steuerkolbens 4 für ein nicht gezeigtes Steuerventil 1. Der Steuerkolben 4 umfasst einen ersten Dichtabschnitt 47, einen zweiten Dichtabschnitt 48 und einen dritten Dichtabschnitt 49, die einen Durchmesser D1, D2, D3 aufweisen, der größer ist als die Durchmesser des Steuerkolbens 4 vor, zwischen und hinter den Dichtabschnitten 47, 48, 49 in den ersten, zweiten, dritten und vierten Steuerkolbenabschnitten 41, 42, 43, 44 . Der erste Dichtabschnitt 47 und der zweite Dichtabschnitt 48 begrenzen den zweiten Steuerkolbenabschnitt 42 in Axialrichtung des Steuerkolbens 4, der zweite Dichtabschnitt 48 und der dritte Dichtabschnitt 49 begrenzen den dritten Steuerkolbenabschnitt 43 in der Axialrichtung. Der Steuerkolbenabschnitt 41 bildet in diesem Ausführungsbeispiel ebenfalls einen Dichtabschnitt 50 mit einem Durchmesser D4. Der Steuerkolben 4 weist eine erste Wirkfläche W1, eine zweite Wirkfläche W2 und eine dritte Wirkfläche W3 auf. In diesem Ausführungsbeispiel sind lediglich die erste Wirkfläche W1 und die zweite Wirkfläche W2 mit Druckfluid beaufschlagbar. Die dritte Wirkfläche W3 ist an einen Auslass, ein Reservoir oder an eine Saugseite angebunden. Grundsätzlich ist es denkbar, dass alle drei Wirkflächen W1, W2, W3 mit Druckfluid beaufschlagbar sind.

Die Durchmesser D1, D2, D3 sind erfindungsgemäß unterschiedlich. Das heißt, wenigstens einer der Durchmesser D1, D2, D3 ist kleiner als der andere oder die anderen der Durchmesser D1, D2, D3, so dass, wenn der Steuerkolben 4 in einem Kolbenraum 3 mit einem, in einem Verschiebebereich von wenigstens zwei benachbarten Dichtabschnitten 47, 48, 49 des Steuerkolbens 4, konstanten Durchmesser angeordnet ist, der oder die Dichtabschnitt/e 47, 48, 49 mit dem kleineren Durchmesser eine gewollte oder gezielte Leckage, bevorzugt durch einen dauerhaft offenen Leckagepfad L1, aus einem der Steuerkolbenabschnitte 41, 42, 43, 44 in einen der benachbarten Steuerkolbenabschnitte 41, 42, 43, 44 zulassen. Eine gewollte Leckage im Sinne der Erfindung kann natürlich auch dann hergestellt werden, wenn der Durchmesser des Kolbenraums 3 in Bereichen der Dichtabschnitte 47, 48, 49, 50 unterschiedlich ist.

Um die gewollte Leckage zu erzielen, kann ein oder können mehrere der Dichtabschnitt/e 47, 48, 49 zum Beispiel auch alleine oder zusätzlich wenigstens eine Nut am Außenumfang des/der Dichtabschnitte 47, 48, 49, eine Struktur an der radial äußeren Umfangsfläche des/der Dichtabschnitte 47, 48, 49, die den Durchtritt von Fluid ermöglicht, wenigstens eine Durchgangsbohrung oder einen anderen Fluidpfad für die gewollte Leckage zwischen zwei benachbarten Steuerkolbenabschnitten 41, 42, 43, 44 umfassen.

In den folgenden Figuren wird ein Ausführungsbeispiel eines Steuerventils 1 mit einem Steuerkolben 4 gemäß der Figur 1 gezeigt. Um die Figuren nicht mit Bezugszeichen zu überlasten, werden nicht alle Bezugszeichen aus der Figur 1 wiedergegeben. Im Zweifelsfall kann die Figur 1 zum besseren Verständnis herangezogen werden.

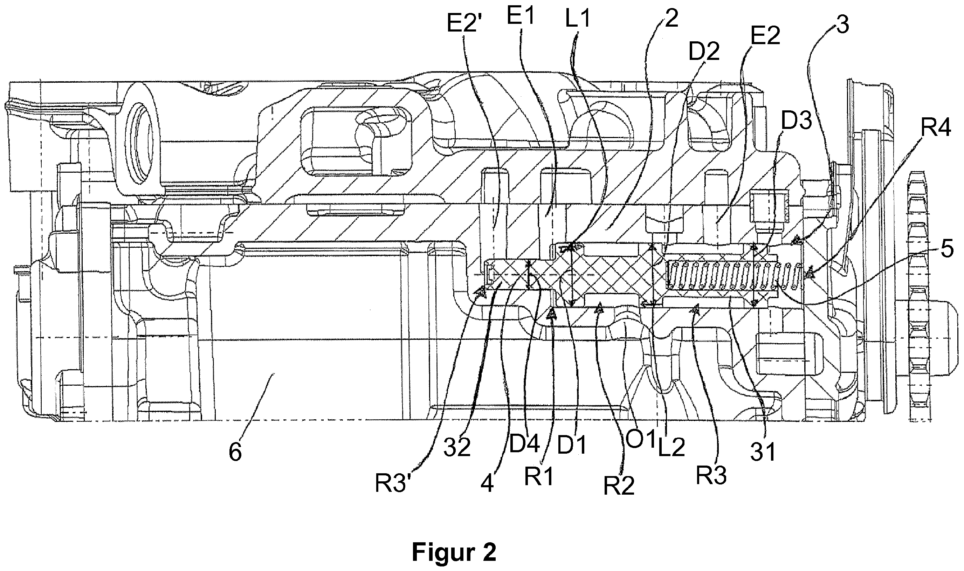

Die Figur 2 zeigt ein Steuerventil 1 zur Steuerung oder Regelung einer verstellbaren Rotationspumpe 6 eines Kraftfahrzeugs. Das Steuerventil 1 weist ein Ventilgehäuse 2 und einen Kolbenraum 3, in dem der Steuerkolben 4 verschiebbar gelagert ist, auf. In diesem Ausführungsbeispiel bildet ein Pumpengehäuse der Rotationspumpe 6 auch das Ventilgehäuse 2. Der Kolbenraum 3 ist im Ausführungsbeispiel aus einem ersten Kolbenraumabschnitt 31 mit einem konstanten Innendurchmesser und einem zweiten Kolbenraumabschnitt 32 mit einem konstanten Innendurchmesser gebildet, wobei der Innendurchmesser des zweiten Kolbenraumabschnitts 32 kleiner ist als der Innendurchmesser des ersten Kolbenraumabschnitts 31. Mit Blick auf die Figur 1 entspricht der Innendurchmesser des ersten Kolbenraumabschnitts 31 dem größten Durchmesser D1, D2, D3 des oder der Dichtabschnitts/e 47, 48, 49.

Das Steuerventil 1 umfasst eine Rückstelleinrichtung 5, die den Steuerkolben 4 in eine erste Endposition drückt, die er zum Beispiel beim Stillstand der Rotationspumpe 6 einnimmt und in der zum Beispiel eine Vollförderung der verstellbaren Rotationspumpe 6, die nur teilweise dargestellt ist, eingestellt wird. Im gezeigten Ausführungsbeispiel ist die Rückstelleinrichtung 5 ein Federelement bzw. eine Ventilfeder 5, vorteilhafterweise eine Druckfeder in Form einer Spiralfeder. Das Steuerventil 1 umfasst mehrere Einlässe und Auslässe, von denen aber nur die zum besseren Verständnis der Erfindung wichtigen mit Bezugszeichen versehen und im Folgenden näher beschrieben werden. Die Funktionsweise des Steuerventils 1 ist dem Fachmann wohl bekannt, so dass sich eine detaillierte Beschreibung erübrigt.

Das Steuerventil 1, respektive der Kolbenraum 3, wird im gezeigten Ausführungsbeispiel durch den Steuerkolben 4 in fünf Ventilräume R1, R2, R3, R3', R4 geteilt. Die Ventilräume R3, R3' sind über die Eingänge E2 beziehungsweise E2' dauerhaft mit einer Druckseite der Rotationspumpe 6 verbunden. Der Ventilraum R2 ist über einen Auslass O1 dauerhaft mit einem Reservoir 10 oder dem Saugbereich der Rotationspumpe 6 verbunden. Der Ventilraum R1 ist über den Einlass E1 mit einer Fluidzuführung verbunden, über die Fluid unterschiedlichen Drucks zugeführt werden kann. Der Ventilraum R1 ist an die Druckseite der Rotationspumpe 6 zuschaltbar. Der Druck in den Ventilräumen R3' und R1 wirkt gegen die Kraft der Rückstelleinrichtung 5 und kann den Steuerkolben 4 in dem Kolbenraum 3 linear in Richtung des Ventilraums R4 bewegen und in einer eingenommenen Position halten.

In der Figur 2 ist der erste Leckagepfad L1 eingezeichnet, der einen gewollten Übertritt von Fluid aus dem Ventilraum R1 in den Ventilraum R2 ermöglicht und somit den Ventilraum R1 dauerhaft und gedrosselt mit dem Auslass O1 verbindet. Der zweite Leckagepfad L2, der wie bereits im allgemeinen Teil beschrieben, nicht ein gewollter Leckagepfad sein muss, sondern alleine durch die zulässigen Herstellungstoleranzen gebildet werden kann, verbindet den Ventilraum R3 mit dem Ventilraum R2. Die Leckage über den ersten Leckagepfad L1 ist dabei größer als die Leckage über den zweiten Leckagepfad L2. Über den Leckagepfad L1 kann bei gleichen Betriebsbedingungen und gleicher Zeit wenigstens die eineinhalbfache Menge, bevorzugt wenigstens die doppelte Menge an Fluid vom Ventilraum R1 in den Ventilraum R2 fließen, wie über den Leckagepfad L2 aus dem Ventilraum R3 in den Ventilraum R2.

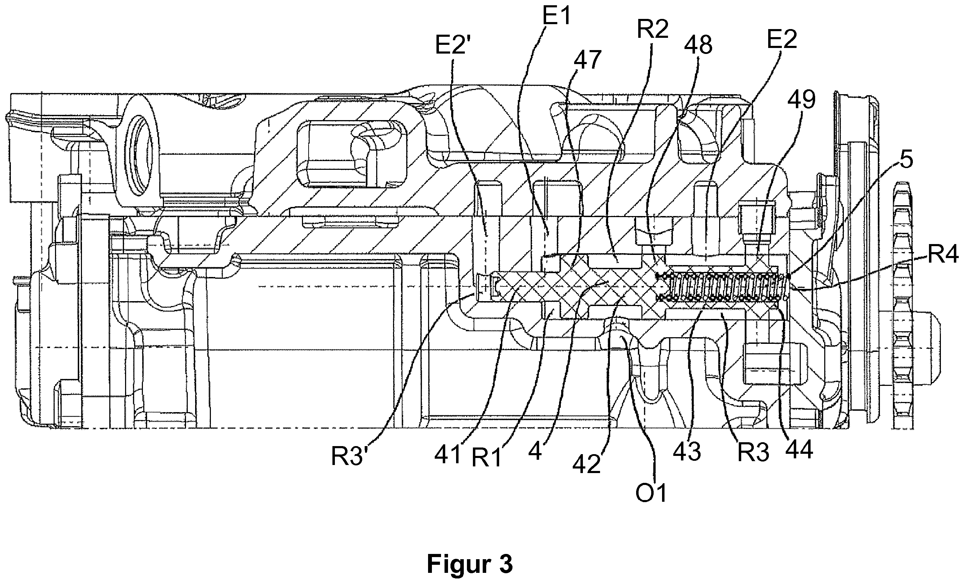

Die Figur 3 zeigt das Steuerventil 1 mit dem Steuerkolben 4 in einer zweiten Endposition oder kurz vor der zweiten Endposition, in der die Rückstelleinrichtung 5 durch das in den Kolbenraum 3 einströmende Druckfluid maximal komprimiert ist. Alle anderen wesentlichen und auf die Erfindung zu lesenden Merkmale sind unverändert und müssen daher nicht wiederholt werden.

Die Figur 4 zeigt eine Schaltskizze einer Kraftfahrzeugvorrichtung mit der verstellbaren Verdrängerpumpe 6, beispielsweise einer Flügelzellenpumpe, Pendelschieberpumpe oder einer Innenzahnrad- oder Außenzahnradpumpe, mit dem Steuerventil 1 und einer Kontrolleinrichtung 9 zur Steuerung des Steuerventils 1. Die Kraftfahrzeugvorrichtung ist zur Schmierung und/oder Kühlung eines Antriebsmotors 8, vorzugsweise einer Brennkraftmaschine, oder zur Versorgung eines Getriebes des Kraftfahrzeugs vorgesehen. Die Kontrolleinrichtung 9 ist als ein Magnetventil ausgebildet. Es ist als ein PWM-Ventil ausgeführt. Die Kontrolleinrichtung 9 stellt einen Sekundärdruck, der über das Steuerventil 1 auf die Verstelleinrichtung 7 der Rotationspumpe 6 wirkt, ein. Die Kontrolleinrichtung 9 verbindet den Ventilraum R1 des Steuerventils 1 mit der Druckseite der Rotationspumpe 6 oder trennt den Ventilraum R1 des Steuerventils 1 von der Druckseite der Rotationspumpe 6.

Von der Druckseite der Pumpe 6 wird das Druckfluid zu einem Teil über eine Leitung S1 einem nicht gezeigten Verbraucher zugeleitet und fließt teilweise über eine Leitung S2 auf direktem Weg zu dem Steuerventil 1, wo es durch die Einlässe E2 und E2' in die Ventilräume R3, R3' einströmt. Ein weiterer Teil des Druckfluids wird über die Leitung S3, der Kontrolleinrichtung 9 zugeleitet, die im geöffneten Zustand diesen Teil des Druckfluids durch den Einlass E1 in den Ventilraum R1 leitet und im geschlossenen Zustand die Druckseite der Rotationspumpe 6 von dem Einlass E1 trennt. Bei geöffneter Kontrolleinrichtung 9 wird daher eine Wirkfläche für den Druck des Druckfluids auf den Steuerkolben 4 vergrößert, so dass dieser Druck größer ist als der Druck der Rückstelleinrichtung 5, wodurch der Steuerkolben 4 aus seiner ersten Endposition in der Figur 2 in seine zweite Endposition in der Figur 3 bewegt werden kann.

### Bezugszeichenliste

- 1: Steuerventil
- 2: Ventilgehäuse
- 3: Kolbenraum
- 31: Kolbenraumabschnitt
- 32: Kolbenraumabschnitt
- 4: Steuerkolben
- 41: Steuerkolbenabschnitt
- 42: Steuerkolbenabschnitt
- 43: Steuerkolbenabschnitt
- 44: Steuerkolbenabschnitt
- 47: Dichtabschnitt
- 48: Dichtabschnitt
- 49: Dichtabschnitt
- 50: Dichtabschnitt
- 5: Rückstelleinrichtung, Ventilfeder
- 6: Rotationspumpe
- 7: Verstelleinrichtung
- 8: Motor
- 9: Kontrolleinrichtung
- 10: Reservoir
- D1: Durchmesser
- D2: Durchmesser
- D3: Durchmesser
- D4: Durchmesser
- W1: Wirkfläche
- W2: Wirkfläche
- W3: Wirkfläche
- E1: Einlass
- E2: Einlass
- E2': Einlass
- L1: Leckagepfad
- L2: Leckagepfad
- O1: Auslass
- R1: Ventilraum, Ventilkammer
- R2: Ventilraum, Ventilkammer
- R3: Ventilraum, Ventilkammer
- R3': Ventilraum, Ventilkammer
- R4: Ventilraum, Ventilkammer
- S1: Leitung
- S2: Leitung
- S3: Leitung

## Patentansprüche

1. Steuerventil (1), insbesondere für eine verstellbare Rotationspumpe (6) eines Kraftfahrzeugs, mit
a) einem Ventilgehäuse (2), das einen Kolbenraum (3) aufweist, und
b) einem Steuerkolben (4), der beweglich in dem Kolbenraum (3) angeordnet ist und den Kolbenraum (3) in wenigstens einen ersten Ventilraum (R1) und einen zweiten Ventilraum (R2) unterteilt,
c) und zumindest einem Leckagepfad (L1), der eine gewollte Leckage zwischen dem ersten Ventilraum (R1) und dem zweiten Ventilraum (R2) einstellt,
d) wobei der Steuerkolben (4) den Kolbenraum (3) in wenigstens drei Ventilräume (R1, R2, R3, R3') unterteilt, und **dadurch gekennzeichnet, dass** ein weiterer Leckagepfad (L2) den dritten Ventilraum (R3) und den zweiten Ventilraum (R2) oder den dritten Ventilraum (R3') und den ersten Ventilraum (R1) miteinander verbindet, und dass
e) die Leckage über den ersten Leckagepfad (L1) größer ist, als die Leckage über den weiteren Leckagepfad (L2).

2. Steuerventil nach Anspruch 1, mit wenigstens einem Einlass (E1), der in zumindest einer Kolbenstellung in den ersten Ventilraum (R1) mündet und/oder wenigstens einem weiteren Einlass (E2, E2'), der in zumindest einer Kolbenstellung in den dritten Ventilraum (R3, R3') mündet.

3. Steuerventil nach einem der vorhergehenden Ansprüche, wobei eine Innenwandung des Ventilgehäuses (2) und eine Außenwandung des Steuerkolbens (4) zur Unterteilung des Kolbenraums (3) jeweils einen Dichtspalt bilden, der die Ventilräume (R1, R2, R3, R3', R4) voneinander trennt, und der Leckagepfad (L1) durch den Dichtspalt zwischen dem ersten Ventilraum (R1) und dem zweiten Ventilraum (R2) verläuft.

4. Steuerventil nach Anspruch 3, wobei zur Einstellung des Leckagepfads (L1) der Dichtspalt zwischen dem ersten Ventilraum (R1) und dem zweiten Ventilraum (R2) größer ausgeführt ist als der Dichtspalt zwischen dem zweiten Ventilraum (R2) und dem dritten Ventilraum (R3) oder als der Dichtspalt zwischen dem ersten Ventilraum (R1) und dem dritten Ventilraum (R3').

5. Steuerventil nach einem der vorhergehenden Ansprüche, wobei der zweite Ventilraum (R2), bevorzugt dauerhaft, mit einem Auslass (O1) verbunden ist.

6. Steuerventil nach einem der vorhergehenden Ansprüche, wobei der Leckagepfad (L1)
- durch einen Spalt zwischen der Innenwandung des Kolbenraums (3) und der Außenwandung des Steuerkolbens (4) gebildet ist und/oder
- durch eine Struktur im Bereich der den ersten Ventilraum (R1) von dem zweiten Ventilraum (R2) trennenden Außenwandung des Steuerkolbens (4) gebildet ist und/oder
- durch eine Struktur an der Innenwandung des Kolbenraums (3) in einem Verschiebebereich des Leckagepfads (L1) gebildet ist und/oder
- durch wenigstens eine Durchgangsöffnung im Steuerkolben (4), die den ersten Ventilraum (R1), bevorzugt direkt, mit dem zweiten Ventilraum (R2) fluidisch verbindet, gebildet ist und/oder
- durch wenigstens eine Durchgangsöffnung im Ventilgehäuse (2), die den ersten Ventilraum (R1) und/oder den in den ersten Ventilraum (R1) mündenden Einlass (E1), bevorzugt direkt, mit dem zweiten Ventilraum (R2) und/oder den in den zweiten Ventilraum (R2) mündenden Auslass fluidisch verbindet, gebildet ist.

7. Steuerventil nach einem der vorhergehenden Ansprüche in Kombination mit Anspruch 2, wobei die weitere Leckage zwischen dem dritten Ventilraum (R3) und dem zweiten Ventilraum (R2) oder zwischen dem dritten Ventilraum (R3') und dem ersten Ventilraum (R1) eine gewollte Leckage über einen weiteren Leckagepfad (L2) ist, wobei die gewollte Leckage über den Leckagepfad (L1) vorzugsweise wenigstens um das 1,5-fache größer ist als die weitere Leckage.

8. Steuerventil nach Anspruch 7, wobei der weitere Leckagepfad (L2)
- durch einen Spalt zwischen der Innenwandung des Kolbenraums (3) und der Außenwandung des Steuerkolbens (4) gebildet ist und/oder
- durch eine Struktur im Bereich der den ersten Ventilraum (R1) von dem dritten Ventilraum (R3') trennenden Außenwandung des Steuerkolbens (4) gebildet ist und/oder
- durch eine Struktur im Bereich der den zweiten Ventilraum (R2) von dem dritten Ventilraum (R3) trennenden Außenwandung des Steuerkolbens (4) gebildet ist und/oder
- durch eine Struktur an der Innenwandung des Kolbenraums (3) in einem Verschiebebereich des weiteren Leckagepfads (L2) gebildet ist und/oder
- durch wenigstens eine Durchgangsöffnung im Steuerkolben (4), die den ersten Ventilraum (R1), bevorzugt direkt, mit dem dritten Ventilraum (R3') fluidisch verbindet, gebildet ist und/oder
- durch wenigstens eine Durchgangsöffnung im Steuerkolben (4), die den zweiten Ventilraum (R2), bevorzugt direkt, mit dem dritten Ventilraum (R3) fluidisch verbindet, gebildet ist und/oder
- durch wenigstens eine Durchgangsöffnung im Ventilgehäuse (2), die den ersten Ventilraum (R1) und/oder den in den ersten Ventilraum (R1) mündenden Einlass (E1), bevorzugt direkt, mit dem dritten Ventilraum (R3') und/oder den in den dritten Ventilraum (R3') mündenden Einlass (E2') fluidisch verbindet, gebildet ist und/oder
- durch wenigstens eine Durchgangsöffnung im Ventilgehäuse (2), die den zweiten Ventilraum (R2) und/oder den in den zweiten Ventilraum (R2) mündenden Auslass, bevorzugt direkt, mit dem dritten Ventilraum (R3) und/oder den in den dritten Ventilraum (R3) mündenden Einlass (E2) fluidisch verbindet, gebildet ist.

9. Steuerventil nach einem der vorhergehenden Ansprüche, das eine Rückstelleinrichtung (5), vorzugsweise Ventilfeder (5), umfasst, die einem im ersten Ventilraum (R1) herrschenden Druck des Fluids und/oder einem im dritten Ventilraum (R3, R3') des Anspruchs 2 herrschenden Druck des Fluids entgegenwirkt.

10. Steuerventil nach einem der vorhergehenden Ansprüche, wobei wenigstens einer aus erstem Ventilraum (R1) und drittem Ventilraum (R3, R3') nach Anspruch 1 permanent mit dem Fluid beaufschlagt wird.

11. Steuerventil nach einem der vorhergehenden Ansprüche, wobei wenigstens einer aus erstem Ventilraum (R1) und drittem Ventilraum (R3, R3') nach Anspruch 1 über eine Kontrolleinrichtung (9) wahlweise mit dem Druck des Fluids beaufschlagbar und im Druck entlastbar ist.

12. Kraftfahrzeugvorrichtung, umfassend eine verstellbare Rotationpumpe (6) mit einer Verstelleinrichtung (7) zum Verstellen eines Fördervolumens der Rotationspumpe (6) und einem Steuerventil (1) nach einem der vorhergehenden Ansprüche mit dem ein Druck zum Verstellen des Fördervolumens steuerbar oder regelbar ist.

13. Kraftfahrzeugvorrichtung nach Anspruch 12, wobei der erste Ventilraum (R1) des Steuerventils (1) über eine Kontrolleinrichtung (9) mit einer Hochdruckseite der Rotationspumpe (6) verbindbar und von der Hochdruckseite trennbar ist.

14. Kraftfahrzeugvorrichtung nach Anspruch 12 oder 13, wobei der zweite Ventilraum (R2) des Steuerventils (1) permanent mit einem Reservoir (10) oder einer Saugseite der Rotationspumpe (6) verbunden ist.

15. Kraftfahrzeugvorrichtung nach einem der Ansprüche 12 bis 14, wobei der dritte Ventilraum (R3, R3') des Steuerventils (1) permanent mit einer Hochdruckseite der Rotationspumpe (6) verbunden ist.

## Claims

1. A control valve (1), in particular for an adjustable rotary pump (6) of a motor vehicle, comprising:
a) a valve housing (2) which comprises a piston space (3); and
b) a control piston (4) which is movably arranged in the piston space (3) and sub-divides the piston space (3) into at least a first valve space (R1) and a second valve space (R2),
c) and at least a leakage path (L1) which sets a desired leakage between the first valve space (R1) and the second valve space (R2),
d) wherein the control piston (4) sub-divides the piston space (3) into at least three valve spaces (R1, R2, R3, R3'),
**characterised in that**
e) another leakage path (L2) connects the third valve space (R3) and the second valve space (R2) or the third valve space (R3') and the first valve space (R1) to each other, and **in that**
f) the leakage via the first leakage path (L1) is larger than the leakage via the other leakage path (L2).

2. The control valve according to Claim 1, comprising at least an inlet (E1) which feeds into the first valve space (R1) in at least one position of the piston and/or at least another inlet (E2, E2') which feeds into the third valve space (R3, R3') in at least one position of the piston.

3. The control valve according to any one of the preceding claims, wherein in order to sub-divide the piston space (3), an inner wall of the valve housing (2) and an outer wall of the control piston (4) each form a sealing gap which separates the valve spaces (R1, R2, R3, R3', R4) from each other, and the leakage path (L1) extends through the sealing gap between the first valve space (R1) and the second valve space (R2).

4. The control valve according to Claim 3, wherein in order to set the leakage path (L1), the sealing gap between the first valve space (R1) and the second valve space (R2) is embodied so as to be larger than the sealing gap between the second valve space (R2) and the third valve space (R3) or larger than the sealing gap between the first valve space (R1) and the third valve space (R3').

5. The control valve according to any one of the preceding claims, wherein the second valve space (R2) is connected, preferably permanently, to an outlet (O1).

6. The control valve according to any one of the preceding claims, wherein the leakage path (L1) is formed by
- a gap between the inner wall of the piston space (3) and the outer wall of the control piston (4) and/or
- a structure in the region of the outer wall of the control piston (4) which separates the first valve space (R1) from the second valve space (R2) and/or
- a structure on the inner wall of the piston space (3) in a shifting region of the leakage path (L1) and/or
- at least one passage opening, in the control piston (4), which fluidically connects the first valve space (R1) to the second valve space (R2), preferably directly, and/or
- at least one passage opening, in the valve housing (2), which fluidically connects the first valve space (R1), and/or the inlet (E1) which feeds into the first valve space (R1), to the second valve space (R2) and/or the outlet which feeds into the second valve space (R2), preferably directly.

7. The control valve according to any one of the preceding claims in combination with Claim 2, wherein the other leakage between the third valve space (R3) and the second valve space (R2) or between the third valve space (R3') and the first valve space (R1) is a desired leakage via another leakage path (L2), wherein the desired leakage via the leakage path (L1) is preferably at least 1.5 times larger than the other leakage.

8. The control valve according to Claim 7, wherein the other leakage path (L2) is formed by
- a gap between the inner wall of the piston space (3) and the outer wall of the control piston (4) and/or
- a structure in the region of the outer wall of the control piston (4) which separates the first valve space (R1) from the third valve space (R3') and/or
- a structure in the region of the outer wall of the control piston (4) which separates the second valve space (R2) from the third valve space (R3) and/or
- a structure on the inner wall of the piston space (3) in a shifting region of the other leakage path (L2) and/or
- at least one passage opening, in the control piston (4), which fluidically connects the first valve space (R1) to the third valve space (R3'), preferably directly, and/or
- at least one passage opening, in the control piston (4), which fluidically connects the second valve space (R2) to the third valve space (R3), preferably directly, and/or
- at least one passage opening, in the valve housing (2), which fluidically connects the first valve space (R1), and/or the inlet (E1) which feeds into the first valve space (R1), to the third valve space (R3') and/or the inlet (E2') which feeds into the third valve space (R3'), preferably directly, and/or
- at least one passage opening, in the valve housing (2), which fluidically connects the second valve space (R2), and/or the outlet which feeds into the second valve space (R2), to the third valve space (R3) and/or the inlet (E2) which feeds into the third valve space (R3), preferably directly.

9. The control valve according to any one of the preceding claims, comprising a restoring means (5), preferably a valve spring (5), which acts counter to a fluid pressure prevailing in the first valve space (R1) and/or a fluid pressure prevailing in the third valve space (R3, R3').

10. The control valve according to any one of the preceding claims, wherein the fluid is permanently applied to at least one of the first valve space (R1) and the third valve space (R3, R3') according to Claim 1.

11. The control valve according to any one of the preceding claims, wherein the fluid pressure can be selectively applied to and relieved from at least one of the first valve space (R1) and the third valve space (R3, R3') according to Claim 1 via a controlling means (9).

12. A motor vehicle device comprising an adjustable rotary pump (6) which comprises an adjusting means (7), for adjusting a delivery volume of the rotary pump (6), and a control valve (1) according to any one of the preceding claims, using which a pressure for adjusting the delivery volume can be controlled or governed.

13. The motor vehicle device according to Claim 12, wherein the first valve space (R1) of the control valve (1) can be connected to and separated from a high-pressure side of the rotary pump (6) via a controlling means (9).

14. The motor vehicle device according to Claim 12 or 13, wherein the second valve space (R2) of the control valve (1) is permanently connected to a reservoir (10) or a suction side of the rotary pump (6).

15. The motor vehicle device according to any one of Claims 12 to 14, wherein the third valve space (R3, R3') of the control valve (1) is permanently connected to a high-pressure side of the rotary pump (6).

## Revendications

1. Soupape de commande (1), en particulier pour une pompe rotative (6) réglable d'un véhicule automobile, comprenant
a) un boîtier de soupape (2) qui présente une chambre de piston (3), et
b) un piston de commande (4) qui est disposé mobile dans la chambre de piston (3) et divise la chambre de piston (3) en au moins une première chambre de soupape (R1) et une deuxième chambre de soupape (R2),
c) et au moins une voie de fuite (L1) qui ajuste une fuite voulue entre la première chambre de soupape (R1) et la deuxième chambre de soupape (R2),
d) dans laquelle le piston de commande (4) divise la chambre de piston (3) en au moins trois chambres de soupape (R1, R2, R3, R3'), et **caractérisée en ce qu'**
une voie de fuite additionnelle (L2) relie la troisième chambre de soupape (R3) et la deuxième chambre de soupape (R2) ou la troisième chambre de soupape (R3') et la première chambre de soupape (R1) l'une à l'autre, et **en ce que**
e) la fuite sur la première voie de fuite (L1) est plus grande que la fuite sur la voie de fuite additionnelle (L2).

2. Soupape de commande selon la revendication 1, comprenant au moins une entrée (E1), qui débouche dans au moins une position de piston dans la première chambre de soupape (R1), et/ou au moins une entrée additionnelle (E2, E2') qui débouche dans au moins une position de piston dans la troisième chambre de soupape (R3, R3').

3. Soupape de commande selon une des revendications précédentes, dans laquelle une paroi intérieure du boîtier de soupape (2) et une paroi extérieure du piston de commande (4) forment respectivement un espace d'étanchéité pour diviser la chambre de piston (3) qui sépare les chambres de soupape (R1, R2, R3, R3', R4) l'une de l'autre, et la voie de fuite (L1) s'étend à travers l'espace d'étanchéité entre la première chambre de soupape (R1) et la deuxième chambre de soupape (R2).

4. Soupape de commande selon la revendication 3, dans laquelle, pour ajuster la voie de fuite (L1), l'espace d'étanchéité est réalisé plus grand entre la première chambre de soupape (R1) et la deuxième chambre de soupape (R2) que l'espace d'étanchéité entre la deuxième chambre de soupape (R2) et la troisième chambre de soupape (R3) et/ou que l'espace d'étanchéité entre la première chambre de soupape (R1) et la troisième chambre de soupape (R3').

5. Soupape de commande selon une des revendications précédentes, dans laquelle la deuxième chambre de soupape (R2) est reliée à une sortie (O1), de préférence de manière permanente.

6. Soupape de commande selon une des revendications précédentes, dans laquelle la voie de fuite (L1)
- est formée par un espace entre la paroi intérieure de la chambre de piston (3) et la paroi extérieure du piston de commande (4) et/ou
- est formée par une structure au niveau de la paroi extérieure du piston de commande (4) séparant la première chambre de soupape (R1) de la deuxième chambre de soupape (R2) et/ou
- est formée par une structure au niveau de la paroi intérieure de la chambre de piston (3) dans une zone de déplacement de la voie de fuite (L1) et/ou
- est formée par au moins une ouverture de passage dans le piston de commande (4), laquelle relie de manière fluidique la première chambre de soupape (R1), de préférence de manière directe, à la deuxième chambre de soupape (R2), et/ou
- est formée par au moins une ouverture de passage dans le boîtier de soupape (2), laquelle relie de manière fluidique la première chambre de soupape (R1) et/ou l'entrée (E1) débouchant dans la première chambre de soupape (R1), de préférence de manière directe, à la deuxième chambre de soupape (R2) et/ou la sortie débouchant dans la deuxième chambre de soupape (R2).

7. Soupape de commande selon une des revendications précédentes en combinaison avec la revendication 2, dans laquelle la fuite additionnelle entre la troisième chambre de soupape (R3) et la deuxième chambre de soupape (R2) ou entre la troisième chambre de soupape (R3') et la première chambre de soupape (R1) est une fuite voulue sur une voie de fuite additionnelle (L2), dans laquelle la fuite voulue sur la voie de fuite (L1) est de préférence au moins 1,5 fois plus grande que la fuite additionnelle.

8. Soupape de commande selon la revendication 7, dans laquelle la voie de fuite additionnelle (L2)
- est formée par un espace entre la paroi intérieure de la chambre de piston (3) et la paroi extérieure du piston de commande (4) et/ou
- est formée par une structure au niveau de la paroi extérieure du piston de commande (4) séparant la première chambre de soupape (R1) de la troisième chambre de soupape (R3') et/ou
- est formée par une structure au niveau de la paroi extérieure du piston de commande (4) séparant la deuxième chambre de soupape (R2) de la troisième chambre de soupape (R3) et/ou
- est formée par une structure au niveau de la paroi intérieure de la chambre de piston (3) dans une zone de déplacement de la voie de fuite additionnelle (L2) et/ou
- est formée par au moins une ouverture de passage dans le piston de commande (4), laquelle relie de manière fluidique la première chambre de soupape (R1), de préférence de manière directe, à la troisième chambre de soupape (R3') et/ou
- est formée par au moins une ouverture de passage dans le piston de commande (4), laquelle relie de manière fluidique la deuxième chambre de soupape (R2), de préférence de manière directe, à la troisième chambre de soupape (R3) et/ou
- est formée par au moins une ouverture de passage dans le boîtier de soupape (2), laquelle relie de manière fluidique la première chambre de soupape (R1) et/ou l'entrée (E1) débouchant dans la première chambre de soupape (R1), de préférence de manière directe, à la troisième chambre de soupape (R3') et/ou l'entrée (E2') débouchant dans la troisième chambre de soupape (R3') et/ou
- est formée par au moins une ouverture de passage dans le boîtier de soupape (2), laquelle relie de manière fluidique la deuxième chambre de soupape (R2) et/ou la sortie débouchant dans la deuxième chambre de soupape (R2), de préférence de manière directe, à la troisième chambre de soupape (R3) et/ou l'entrée (E2) débouchant dans la troisième chambre de soupape (R3).

9. Soupape de commande selon une des revendications précédentes, qui comprend un dispositif de rappel (5), de préférence un ressort de soupape (5), qui agit contre une pression du fluide régnant dans la première chambre de soupape (R1) et/ou une pression du fluide régnant dans la troisième chambre de soupape (R3, R3') de la revendication 2.

10. Soupape de commande selon une des revendications précédentes, dans laquelle au moins une chambre parmi la première chambre de soupape (R1) et la troisième chambre de soupape (R3, R3') selon la revendication 1 est alimentée en fluide de manière permanente.

11. Soupape de commande selon une des revendications précédentes, dans laquelle au moins une chambre parmi la première chambre de soupape (R1) et la troisième chambre de soupape (R3, R3') selon la revendication 1 peut, par le biais d'un moyen de contrôle (9), être sélectivement alimentée en pression du fluide et être limitée en pression.

12. Dispositif de véhicule automobile, comprenant une pompe rotative (6) réglable avec un moyen de régulation (7) pour réguler un débit de la pompe rotative (6) et une soupape de commande (1) selon une des revendications précédentes avec laquelle une pression peut être commandée ou régulée pour réguler le débit.

13. Dispositif de véhicule automobile selon la revendication 12, dans laquelle la première chambre de soupape (R1) de la soupape de commande (1) peut, par le biais d'un moyen de contrôle (9), être reliée à un côté haute pression de la pompe rotative (6) et être séparée de ce côté haute pression.

14. Dispositif de véhicule automobile selon la revendication 12 ou 13, dans laquelle la deuxième chambre de soupape (R2) de la soupape de commande (1) est reliée de manière permanente à un réservoir (10) ou à une admission de la pompe rotative (6).

15. Dispositif de véhicule automobile selon une des revendications 12 à 14, dans laquelle la troisième chambre de soupape (R3, R3') de la soupape de commande (1) est reliée de manière permanente à un côté haute pression de la pompe rotative (6).
